# EUROPÄISCHE PATENTANMELDUNG

(11) **EP 1 947 432 A2**
(43) Veröffentlichungstag der Anmeldung: **23.07.2008**
(21) Anmeldenummer: 07012814.5
(22) Anmeldetag: 29.06.2007
(51) Int. Cl.: G01K 1/16

(54) **Temperatursensor, Sensor und Verfahren zum bestimmen einer Temperatur eines Mediums, Verfahren zum Herstellen eines Temperatursensors zur verbesserten Bestimmung einer Temperatur eines Mediums und Verfahren zum Herstellen eines Sensors, der zusätzlich eine Temperatur eines Mediums bestimmen kann**

(30) Priorität: 30.03.2007 EP 07006752; 19.01.2007 DE 102007002977
(71) Anmelder: Fraunhofer-Gesellschaft zur Förderung der angewandten Forschung e.V., 80686 München (DE)
(72) Erfinder: Schroth, Andreas, Dr., 01187 Dresden (DE); Schneider, Peter, 01189 Dresden (DE)
(74) Vertreter: Zimmermann, Tankred Klaus

(57) **Zusammenfassung**

Es wird ein Temperatursensor zum Bestimmen einer Temperatur eines Mediums (110) mit folgenden Merkmalen beschrieben: einem Temperatursensorelement (120); und einer Schaltung (130), die ausgebildet ist, um basierend auf einer Temperatur an dem Temperatursensorelement (120) und zumindest einer Umgebungsbedingung, die eine thermische Kopplung zwischen dem Temperatursensorelement (120) und dem Medium (110) beeinflusst, die Temperatur des Mediums (110) zu bestimmen.

## Beschreibung

Die vorliegende Erfindung bezieht sich allgemein auf die Temperaturmessung von Medien, beispielsweise auf die Temperaturmessung von gasförmigen oder flüssigen Medien.

Wesentliche Anforderungen bei der Temperaturmessung von strömenden oder von ruhenden, flüssigen oder gasförmigen Medien sind schnelles Ansprechverhalten des Sensors und eine möglichst geringe Beeinträchtigung des Durchflusses des Mediums. Beide Anforderungen widersprechen sich, da für das Erreichen geringer Ansprechzeiten das direkte Einbringen des Temperatursensors in das Medium sinnvoll ist. Das ist allerdings zwangsläufig mit einer Querschnittsverengung verbunden, wodurch der Durchfluss behindert wird. Ein weiteres Problem besteht darin, dass über den Sensorträger eine Wärmeableitung erfolgt und somit eine Verfälschung der Messwerte hervorgerufen wird.

Bekannte Lösungsansätze, die hinsichtlich der Wärmeableitung optimiert sind, verursachen relativ hohen Fertigungsaufwand und hohe Kosten, insbesondere aufgrund der zu realisierenden thermischen Entkopplung zwischen dem Temperatursensor und der Halterung bzw. der Umgebung. Darüber hinaus ist die Genauigkeit der Messung wesentlich von den konkreten Einbau- und Umgebungsbedingungen abhängig.

Für die Erfassung einer physikalischen Größe, z.B. Druck und Temperatur, im System bestehen dabei besondere Anforderungen hinsichtlich der Einbaubedingungen und des Ansprechverhaltens des Sensors. Derzeit ist eine Lösung für einen kombinierten Druck-Temperatur-Sensor der Firma Sensata (ehemals Texas Instruments) mit den folgenden Leistungsdaten bekannt:
- Druckmessbereich: 0 bis 150 bar
- Temperaturmessbereich: -40..180°C
- Genauigkeit: - Temperatur: ±3K
   - Druck: ± 1.5 DS (2.25 bar)
- Ansprechzeit: - Temperatur: < 5 Sekunden
   - Druck 1 ms

Die angegebene Ansprechzeit dieses Sensors für die Temperatur ist für die praktische Anwendung noch nicht ausreichend und bislang auch noch nicht gesichert dargestellt. Sie wird außerdem durch ein starkes Eintauchen des Sensors in den Kältemittelstrom erreicht.

Weitere Lösungen mit schnellerem Ansprechverhalten für die Temperaturmessung basieren auf einer deutlichen Absetzung des Temperaturfühlers vom Sensorkörper, sind jedoch technologisch und in Kostenhinsicht sehr aufwendig.

Es ist die Aufgabe der vorliegenden Erfindung, einen effizienteren Temperatursensor, einen effizienteren Sensor und ein effizienteres Verfahren zum Bestimmen einer Temperatur eines Mediums zu schaffen, sowie ein Verfahren zum Herstellen eines Temperatursensors zur verbesserten Bestimmung einer Temperatur eines Mediums und ein Verfahren zum Herstellen eines Sensors, der zusätzlich eine Temperatur eines Mediums bestimmen kann.

Diese Aufgabe wird durch einen Temperatursensor gemäß Anspruch 1, einen Sensor gemäß Anspruch 11, ein Verfahren zum Bestimmen einer Temperatur eines Mediums gemäß Anspruch 19, ein Verfahren zum Herstellen eines Temperatursensors zur verbesserten Bestimmung einer Temperatur gemäß Anspruch 34 und ein Verfahren zum Herstellen eines Sensors, der zusätzlich eine Temperatur eines Mediums bestimmen kann, gemäß Anspruch 35 gelöst.

Ein Ausführungsbeispiel der Erfindung schafft einen Temperatursensor zum Bestimmen einer Temperatur eines Mediums, mit folgenden Merkmalen: einem Temperatursensorelement; und einer Schaltung, die ausgebildet ist, um basierend auf einer Temperatur am Temperatursensorelement und einer Umgebungsbedingung, die eine thermische Kopplung zwischen dem Temperatursensorelement und dem Medium beeinflusst, die Temperatur des Mediums zu bestimmen.

Ein weiteres Ausführungsbeispiel der vorliegenden Erfindung schafft ein Verfahren zum Bestimmen einer Temperatur eines Mediums, mit: Erfassen einer Temperatur an einem Temperatursensorelement; und Bestimmen der Temperatur des Mediums, basierend auf einer Temperatur an dem Temperatursensorelement und einer Umgebungsbedingung, die eine thermische Kopplung zwischen dem Temperatursensorelement und dem Medium beeinflusst.

Ausführungsbeispiele der vorliegenden Erfindung werden nachfolgend bezugnehmend auf die beiliegenden Zeichnungen detaillierter erläutert. Es zeigen:
- Fig. 1A: ein erstes Ausführungsbeispiel eines Temperatursensors zum Bestimmen einer Temperatur eines Mediums;
- Fig. 1B: ein zweites Ausführungsbeispiel eines Temperatursensors zum Bestimmen einer Temperatur eines Mediums, wobei das Medium in einem Behältnis ist, und ein Temperatursensorelement des Temperatursensors mit dem Medium thermisch direkt gekoppelt ist;
- Fig. 1C: zeigt ein drittes Ausführungsbeispiel eines Temperatursensors, bei dem das Medium in einem Behältnis ist und ein Temperatursensorelement des Temperatursensors über das Behältnis oder ein thermisch leitendes Material mit dem Medium thermisch gekoppelt ist;
- Fig. 2A: zeigt ein erstes Ausführungsbeispiel eines Sensors mit einem Sensorgehäuse, wobei ein Temperatursensorelement des Temperatursensors mit dem Medium thermisch direkt gekoppelt ist;
- Fig. 2B: ein zweites Ausführungsbeispiel eines Sensors mit einem Sensorgehäuse und einem Temperatursensor, bei dem ein Temperatursensorelement des Temperatursensors über das Sensorgehäuse mit dem Medium thermisch gekoppelt ist;
- Fig. 2C: zeigt ein drittes Ausführungsbeispiel eines Sensors mit einem Sensorgehäuse und einem Temperatursensor, wobei der Temperatursensor ein weiteres Temperatursensorelement aufweist;
- Fig. 3: zeigt einen Sensor mit einem Sensorgehäuse und einem Temperatursensor sowie einem weiteren Sensorelement zur Messung einer anderen physikalischen Größe als der Temperatur;
- Fig. 4: ein Ausführungsbeispiel eines Drucksensors mit einem Sensorgehäuse, dem ein Temperatursensorelement eines Temperatursensors hinzugefügt ist;
- Fig. 5: zeigt ein Ausführungsbeispiel eines Ablaufdiagramms zum Erstellen eines Korrekturmodells bzw. Verhaltensmodells;
- Fig. 6: zeigt ein Ablaufdiagramm eines Ausführungsbeispiels eines Verfahrens zum Herstellen eines Temperatursensors zur verbesserten Bestimmung einer Temperatur eines Mediums; und
- Fig. 7: zeigt ein Ablaufdiagramm eines Ausführungsbeispiels eines Verfahrens zum Herstellen eines Sensors, der zusätzlich eine Temperatur eines Mediums bestimmen kann.

In der vorliegenden Anmeldung werden für Objekte und Funktionseinheiten, die gleiche oder ähnliche funktionelle Eigenschaften aufweisen, gleiche Bezugszeichen verwendet. In diesem Zusammenhang wird darauf hingewiesen, dass einerseits, sofern es nicht explizit angegeben ist, Abschnitte, die sich auf Objekte mit ähnlichen oder gleichen funktionalen Eigenschaften beziehen, zwischen den Beschreibungen der verschiedenen Ausführungsbeispielen austauschbar sind. Andererseits wird darauf hingewiesen, dass durch eine gemeinsame Verwendung eines Bezugszeichens für ein Objekt, das in mehr als einem Ausführungsbeispiel auftritt, nicht gesagt ist, dass diese in den verschiedenen Ausführungsbeispielen oder dem betreffenden Ausführungsbeispiel identische Merkmale und Eigenschaften aufweisen. Gemeinsame oder ähnliche Bezugszeichen stellen also keine Aussage bezüglich der konkreten Auslegung oder der Dimensionierung dar.

Ein Ausführungsbeispiel der vorliegenden Erfindung schafft einen Sensor mit einem Sensorgehäuse und einem Temperatursensor zum Bestimmen einer Temperatur eines Mediums, wobei der Sensor derart angeordnet ist, dass das Sensorgehäuse mit dem Medium thermisch direkt gekoppelt ist, und wobei der Temperatursensor zum Bestimmen einer Temperatur eines Mediums folgende Merkmalen aufweist: ein Temperatursensorelement; und eine Schaltung, die ausgebildet ist, um basierend auf einer Temperatur am Temperatursensorelement und einer Umgebungsbedingung, die eine thermische Kopplung zwischen dem Temperatursensorelement und dem Medium beeinflusst, die Temperatur des Mediums zu bestimmen.

Ein Ausführungsbeispiel der vorliegenden Erfindung schafft ferner ein Verfahren zum Herstellen eines Temperatursensors zur verbesserten Bestimmung einer Temperatur eines Mediums, mit einem Temperatursensorelement, das mit dem Medium thermisch gekoppelt werden kann, mit: Hinzufügen einer Schaltung zu dem Temperatursensorelement, wobei die Schaltung ausgebildet ist, um basierend auf der Temperatur an dem Temperatursensorelement und einem Korrekturmodell, durch das eine Abweichung zwischen einer Temperatur an dem Temperatursensorelement und der Temperatur des Mediums, die durch mindestens eine Umgebungsbedingung bedingt ist, reduziert wird, die verbesserte Bestimmung der Temperatur des Mediums zu ermöglichen.

Ein weiteres Ausführungsbeispiel der vorliegenden Erfindung schafft ein Verfahren zum Herstellen eines Sensors mit einem Sensorgehäuse, der zusätzlich eine Temperatur eines Mediums bestimmen kann, mit: Bereitstellen des Sensors; Anordnen eines Temperatursensorelements in dem Sensorgehäuse; und Hinzufügen einer Schaltung, wobei die Schaltung ausgebildet ist, um basierend auf der Temperatur an dem Temperatursensorelement und dem Korrekturmodell, durch das eine Abweichung zwischen einer Temperatur an dem Temperatursensorelement und der Temperatur des Mediums, die durch mindestens eine Umgebungsbedingung bedingt ist, reduziert wird, die Temperatur des Mediums zu bestimmen.

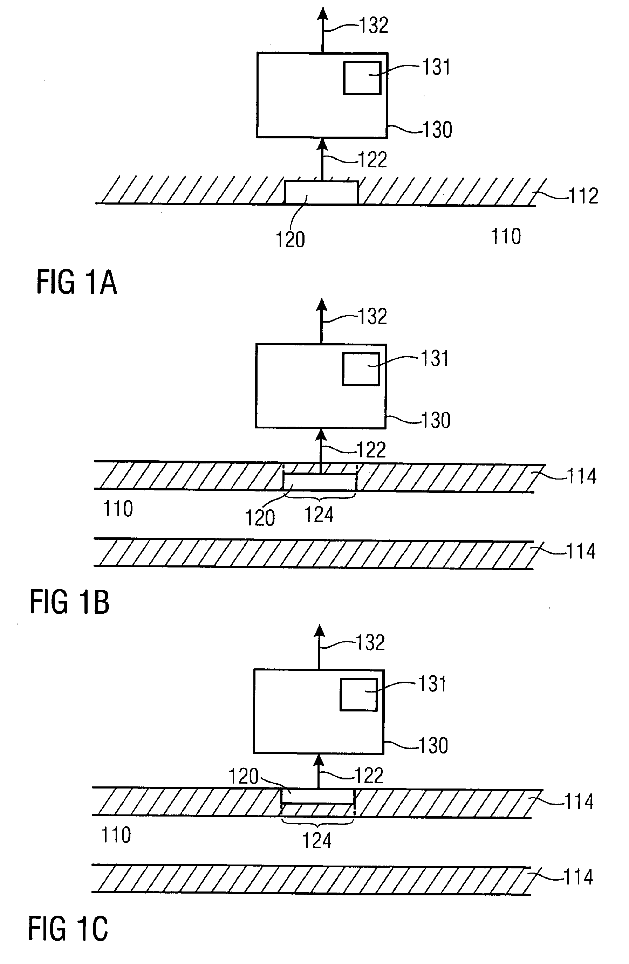

Im Folgenden werden anhand der Fig. 1A bis 1C verschiedene Ausführungsbeispiele eines Temperatursensors zum Bestimmen einer Temperatur eines Mediums beschrieben.

Fig. 1A zeigt ein erstes Ausführungsbeispiel eines Temperatursensors zum Bestimmen einer Temperatur eines Mediums 110, wobei der Temperatursensor ein Temperatursensorelement 120 und eine Schaltung 130 aufweist, wobei die Schaltung ausgebildet ist, um basierend auf einer Temperatur an dem Temperatursensorelement 120 und zumindest einer Umgebungsbedingung, die eine thermische Kopplung zwischen dem Temperatursensorelement 120 und dem Medium 110 beeinflusst, die Temperatur des Mediums zu bestimmen.

Die Genauigkeit der Messung der Temperatur des Mediums 110 mittels des Temperatursensorelements 120 hängt von der Umgebung bzw. den einzelnen Umgebungsbedingungen ab, z.B. von der Umgebungstemperatur, der Wärmeströmung, der Wärmeleitung und/oder dem Wärmeübergang.

Unter Wärmeströmung wird im Allgemeinen der Mittransport von Wärmeenergie in einem strömenden Medium bezeichnet, wobei die Strömung des Mediums eine freie Wärmeströmung, beispielsweise bei warmen Flüssigkeiten oder Gasen, die eine kleinere Dichte als kältere Flüssigkeiten oder Gase haben und deswegen nach oben steigen, oder eine von außen erzwungene, z. B. durch Pumpen verursachte, sein kann.

Unter Wärmeleitung wird im Allgemeinen der Transport von Wärmeenergie innerhalb eines Körpers ohne Teilchentransport verstanden. Die Wärmeleitung wird durch Temperaturdifferenzen verursacht, bzw. versucht diese auszugleichen. Von einem Wärmeübergang wird gesprochen, wenn Wärme zwischen zwei verschiedenen Medien und/oder Körpern übertragen werden.

Die an dem Temperatursensor 120 gemessene Temperatur weicht daher in Abhängigkeit der Strömung, insbesondere der Strömungsgeschwindigkeit, in Abhängigkeit von dem im Wärmeübergang von dem Medium zu dem Temperatursensorelement oder von dem Temperatursensorelement zu dem Medium, von dem Temperatursensorelement zu oder von dem Umgebungsmaterial 112, und von der Wärmeleitung, beispielsweise des Umgebungsmaterials 112, von der "tatsächlichen" Temperatur des Mediums ab.

Die verschiedenen Arten des Wärmetransports, der Wärmeströmung und der Wärmeleitung bzw. Wärmeübergang werden im Folgenden allgemein als thermische Kopplung bezeichnet. Ferner werden der Wärmeübergang und die Wärmeleitung innerhalb eines Mediums oder Körpers allgemein als Wärmeleitung zusammengefaßt. So kann beispielsweise zwischen dem Temperatursensor 120 und dem Medium 110 ein oder mehrere andere Materialien angeordnet sein, die jeweils durch ihre spezifische Wärmeleitfähigkeit (im engeren Sinne) und die jeweiligen Wärmeübergänge zwischen den Materialien bzw. zwischen den Materialien und dem Temperatursensor 120 oder dem Medium 110 die Wärmeleitung bzw. Gesamtwärmeleitung zwischen dem Temperatursensor 120 und dem Medium 110 beeinflussen bzw. bestimmen. In dem Fall, wie z.B. in Fig. 1 dargestellt, dass das Medium 110 und der Temperatursensor 120 direkt aneinandergrenzen spricht man auch von einer direkten thermischen Kopplung.

Allgemein gilt, je geringer die Strömung des Mediums, je besser die thermische Kopplung, die auch als Wärmekopplung bezeichnet werden kann, zwischen dem Medium und dem Temperatursensorelement und je geringer die thermische Kopplung zwischen dem Temperatursensorelement 120 und der Umgebung 112 und die thermische Kopplung zwischen dem Medium 110 und dem Umgebungsmaterial 112, desto geringer ist die Abweichung zwischen der am Temperatursensorelement 120 gemessene Temperatur und der Temperatur des Mediums 110.

Die vorgenannten Überlegungen und Definitionen gelten für alle folgenden Ausführungsbeispiele.

Die Wärmeströmung bzw. Strömung des Mediums, die Wärmeleitung des Mediums bzw. der anderen Materialien und der Wärmeübergang zwischen verschiedenen Medien und/oder Körpern sind Beispiele für die zuvor genannten Umgebungsbedingungen, die die Abweichung der am Temperatursensorelement gemessenen Temperatur von der Temperatur des Mediums beeinflussen.

Die Schaltung 130 ist ausgebildet, um die Temperatur des Mediums basierend auf der Temperatur an dem Temperatursensorelement 120 und einem Korrekturmodell 131 zu bestimmen, wobei das Korrekturmodell auf einer Analyse der Umgebungsbedingungen und der Art der Einflüsse der Umgebungsbedingungen basiert und mittels des Korrekturmodells die Abweichung zwischen der Temperatur an dem Temperatursensorelement 120 und der Temperatur des Mediums 110 reduziert oder in anderen Worten korrigiert wird.

Erfahrungsgemäß haben dabei bestimmte Umgebungsbedingungen einen größeren Einfluss auf die Abweichung als andere, so dass Korrekturmodelle vor allem die eine wesentliche oder die wesentlichen Abweichungen beeinflussenden Umgebungsbedingungen berücksichtigt.

Dabei kann das Temperatursensorelement 120 beispielsweise ein NTC-Element oder ein PTC-Element (NTC - negative temperature coefficient - negativer Temperaturkoeffizient; PTC - positive temperature coefficient - positiver Temperaturkoeffizient) sein, so dass das Temperatursensorelement 120 beispielsweise in Abhängigkeit von der Temperatur seinen Widerstand ändert und der aktuelle Widerstandswert ein Maß für die Temperatur an dem NTC- oder PTC-Element ist. Dieser Widerstandswert bzw. der entsprechende Spannungswert wird dann beispielsweise als Sensorsignal 122 von dem Temperatursensor 120 erzeugt und von der Schaltung 130 empfangen. Alternativ kann das Temperatursensorelement 120 auch ein Thermocoupler sein. Die Temperaturmessung kann jedoch auch auf anderen Messprinzipien beruhen. Die Übertragung des Sensorsignals 122 kann dabei beispielsweise über eine Signalleitung oder auch per Funk erfolgen.

Die Schaltung 130 kann ausgebildet sein, basierend auf dem Sensorsignal 122 und dem Korrekturmodell 131, die Temperatur des Mediums als Temperatursignal 132 auszugeben.

Das Korrekturmodell 131 kann dabei beispielsweise als Wertetabelle, die verschiedenen Sensorsignalen 122 eine entsprechende Temperatur des Mediums zuordnet, gespeichert sein, oder als Kennlinien oder Funktionen in der Schaltung 130 gespeichert sein, basierend auf denen dann die Schaltung 130 für den jeweiligen Sensorsignal 122 die entsprechende Temperatur 132 des Mediums berechnet.

Die Speicherung des Korrekturmodells in der Schaltung 130 kann beispielsweise mittels FPA (field programmable array), FPGA (Field Programmable Gate Array), EEPROM (E-lectrically Erasable Programmable Read Only Memory - Elektrisch löschbarer programmierbarer Nur-Lese-Speicher), Flash-Speicher, ROM-Speicher (Read Only Memory - Nur-Lese-Speicher), RAM (Random Access Memory - Schreib-Lese - Speicher), Registern, optischem, magnetischem Speicher, mechanischem Speicher oder sonstigem Speicher implementiert werden.

Die Schaltung kann entsprechend eine Hardware-codierte Schaltung, ein Mikroprozessor mit unveränderbaren oder veränderbaren Mikroprogrammen, ein Signalprozessor oder ähnliche Implementierungen sein.

Dabei bestimmt die Qualität bzw. Genauigkeit des Korrekturmodells die Genauigkeit der Messung der Temperatur des Mediums. Im Idealfall, in dem das Korrekturmodell alle Umgebungsbedingungen exakt berücksichtigt bzw. korrigiert, stimmt die an dem Temperatursensorelement 120 gemessene Temperatur mit der tatsächlichen Temperatur des Mediums 1100 im Rahmen der Rechengenauigkeit bzw. einer vorgegebenen Toleranz überein.

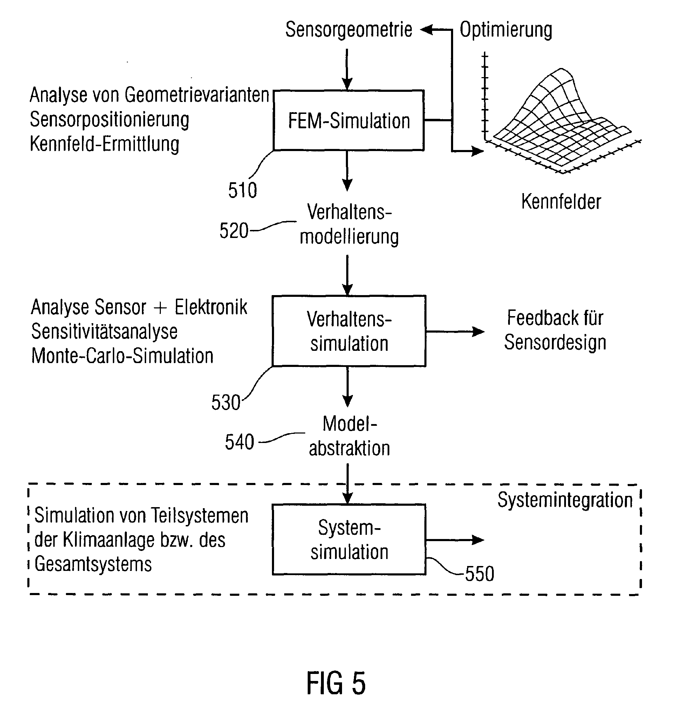

Auf die Erstellung des Korrekturmodells wird später noch anhand der Fig. 5 näher eingegangen.

Fig. 1B zeigt ein zweites Ausführungsbeispiel eines Temperatursensors, bei dem das Medium 110 in einem Behältnis 114, z.B. einem Leitungsrohr, vorliegt, und in diesem Behältnis 114 ruht oder sich durch dieses Behältnis 114 bewegt, z.B. strömt.

In dem in Fig. 1B gezeigten Ausführungsbeispiel ist das Temperatursensorelement 120 auf der Innenseite des Behältnisses 114 angeordnet und in dieses so eingebettet, dass in dem Medium zugewandte Oberfläche mit der Innenfläche des Behältnisses 114 übereinstimmt und nicht in das Medium 110 hineinragt. Dies ermöglicht eine möglichst geringe Beeinflussung der Strömung des Mediums 110, wie zuvor dargelegt.

In anderen Ausführungsbeispielen kann das Temperatursensorelement 120 in das Medium 110 hineinragen, beispielsweise wegen des runden Querschnitts eines Leitungsrohrs, wobei die Anordnung des Temperatursensorelements dabei so gewählt ist, dass das Temperatursensorelement 120 nur geringfügig in das Behältnis hineinragt, um die Beeinflussung der Strömung des Mediums so gering wie möglich zu halten.

Für das Ausführungsbeispiel gemäß Fig. 1B und die folgenden Figuren bzw. Ausführungsbeispiele gelten die Ausführungen zu dem Ausführungsbeispiel gemäß Fig. 1A entsprechend, wobei anstelle des allgemeinen Umgebungsmaterials 112 das Behältnis 114, in diesem Fall ein Leitungsrohr, gezeigt ist. Bezüglich der thermischen Kopplung gelten jedoch die Betrachtungen in analoger Weise.

In dem Ausführungsbeispiel gemäß der Fig. 1B ist das Temperatursensorelement 120 direkt mit dem Medium 110 gekoppelt, das heißt, der Wärmeübergang zwischen dem Medium 110 und dem Temperatursensorelement 120 erfolgt direkt, ohne dass ein anderes Medium oder ein anderer Körper dazwischenliegt.

In einem anderen Ausführungsbeispiel weist die Wand des Behältnisses 114 an der Stelle 124 eine Öffnung auf, in der das Temperatursensorelement 120 auf der Behältnis-Innenseite angeordnet ist, und auf der anderen Seite ein anderes Material, um das Temperatursensorelement 120 zu fixieren, und die Öffnung abzudichten.

Fig. 1C zeigt ein drittes Ausführungsbeispiel des Temperatursensors, bei dem ähnlich wie in Fig. 1B das Medium flüssig oder gasförmig ist, und ruht oder strömt, wobei im Gegensatz zu Fig. 1B das Temperatursensorelement 120 nicht an der Innenseite des Behältnisses, sondern an der Außenseite des Behältnisses angeordnet ist.

Das Temperatursensorelement 120 ist entsprechend über das Behältnis 114 bzw. die Wand des Behältnisses 114 mit dem Medium 110 in Behältnis thermisch gekoppelt.

In einem weiteren Ausführungsbeispiel ist das Temperatursensorelement 120 nur teilweise in dem Behältnis 114 eingebettet oder auf der Wand des Behältnisses aufgebracht. In einem anderen Ausführungsbeispiel ist an der Stelle 124 eine Öffnung in der Wand des Behältnisses 114 und zwischen das Temperatursensorelement 120 und dem Medium 110 ein anderes thermisch leitfähiges Material angeordnet.

Die anhand der Fig. 1B und 1C erläuterten Ausführungsbeispiele schaffen eine effiziente und kostengünstige Möglichkeit, Temperatursensoren einzusetzen. Dabei können die Öffnungen bzw. Aussparungen schon bei der Produktion des Behältnisses 114 oder später eingebracht werden.

Das Ausführungsbeispiel gemäß Fig. 1C ist in dieser Hinsicht besonders effizient, da die Aussparung an der Wand des Behältnisses außen liegt und damit zu jedem, auch späteren Zeitpunkt, angebracht werden kann, und keine weiteren Maßnahmen für eine Abdichtung getroffen werden müssen, da die Wand des Behältnisses 114 auf der Innenseite unberührt bleibt. Ferner muss bei diesem Ausführungsbeispiel, im Gegensatz zu Ausführungsbeispielen, in denen eine durchgehende Öffnung von außen nach innen in eine Wand des Behältnisses 114 eingebracht wird, nach Einbringen des Temperatursensors keine Öffnung abgedichtet werden.

Die Abweichung der Messung der Temperatur des Mediums 110 gemäß dem Ausführungsbeispiel der Fig. 1C hängt dabei insbesondere von der Wärmeleitfähigkeit des Materials der Wand des Behältnisses 114 und der Dicke an der Stelle 124 ab. Bei thermisch sehr leitfähigen Wänden des Behältnisses 114 wird typischerweise außen herum eine thermisch isolierende bzw. entkoppelnde Schicht angebracht, um einen Wärmeaustausch mit der weiteren Umgebung zu reduzieren.

Bei thermisch schlecht leitenden bzw. koppelnden Materialien der Wand des Behältnisses 114 kann, wie zuvor dargestellt, ein anderes thermisch gut leitfähiges Material an der Stelle 124 angeordnet werden. In diesem Fall ist auch die Dichtigkeit bei dem Übergang des zusätzlichen Materials gegenüber der Wand des Behältnisses 114 zu achten. In diesem Zusammenhang wird das zusätzliche Material an der Stelle 124 nicht nur basierend auf seiner thermischen Leitfähigkeit, sondern auch auf seiner Fähigkeit, wie z.B. das Temperatursensorelement 120 gegenüber aggressiven Medien zu schützen, ausgesucht werden.

Die beschriebenen Figuren und Ausführungsbeispiele zeigen bzw. behandeln dabei nicht, dass gegebenenfalls weitere Materialien zwischen das Temperatursensorelement, ein Sensorgehäuse und/oder das Behältnis verwendet werden, um z.B. Öffnungen abzudichten oder eine thermische Kopplung oder Entkopplung zu erzielen.

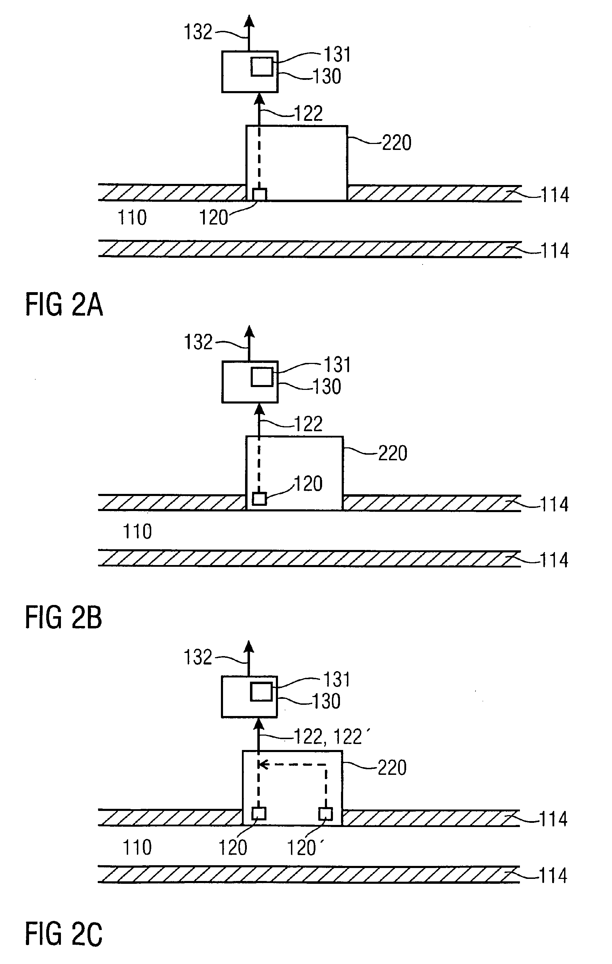

Im Folgenden werden anhand der Fig. 2A bis 2C sowie 3 und 4 verschiedene Ausführungsbeispiele eines Sensors mit einem Sensorgehäuse und einem Temperatursensor beschrieben.

Fig. 2A zeigt ein erstes Ausführungsbeispiel eines Sensors mit einem Gehäuse 220 und einem Temperatursensor, wobei der Temperatursensor ein Temperatursensorelement 120 und eine Schaltung 130 aufweist, wie sie in ihren Ausprägungen und Funktionalitäten beispielsweise schon anhand der Fig. 1A bis 1B erläutert wurden. In dem Ausführungsbeispiel ist das Sensorgehäuse 220 in einer Öffnung der Wand des Behältnisses 114 angeordnet. In dem Ausführungsbeispiel gemäß Fig. 2A ist das Temperatursensorelement 120 in dem Sensorgehäuse 220 so angeordnet, dass das Temperatursensorelement 120 direkt mit dem Medium 110, das in einem Behältnis 114 ruht oder strömt, thermisch gekoppelt ist. Der Begriff direkt thermisch gekoppelt bedeutet, wie schon in den Ausführungsbeispielen gemäß der Fig. 1A bis 1C dargelegt, dass das Temperatursensorelement 120 direkt an das Medium 110 angrenzt und ein direkter Wärmeübergang zwischen dem Temperatursensorelement 120 und dem Medium 110 besteht, mit anderen Worten also kein Wärmetransport über ein anderes Medium oder einen anderen Körper zwischen die beiden erfolgt.

Fig. 2B zeigt ein weiteres prinzipielles Ausführungsbeispiel des Sensors, wobei das Temperatursensorelement im Gegensatz zu dem in Fig. 2A in dem Gehäuse derart angeordnet ist, dass das Temperatursensorelement 120 nicht direkt mit dem Medium 110 thermisch gekoppelt ist, sondern über das Gehäuse 220 mit dem Medium 110 thermisch gekoppelt ist.

Umgebungsbedingungen, die die Messung der Temperatur des Mediums mittels der Temperatur an dem Temperatursensorelement beeinflussen, sind beispielsweise die Umgebungstemperatur, die Geometrie des Behältnisses 114, die Geometrie des Temperatursensorelements 120, die Geometrie des Sensorgehäuses, die Position des Temperatursensorelements 120 in Bezug auf das Behältnis 114, z.B. in das Medium hineinragend oder nicht, die Wärmeleitung zwischen der Behältniswand bzw. Rohrleitung und dem Temperatursensorelement, der Wärmetransport durch das strömende oder ruhende Medium 110 und/oder der Wärmeübergang zum Behältnis oder allgemein der Umgebung bzw. der Wärmeaustausch zwischen Behältnis 114 und Umgebung und/oder der Wärmeaustausch zwischen Sensorgehäuse 220 und Umgebung.

In anderen Worten, analog kann das Korrekturmodell 130 ausgebildet sein diese oder weitere Umgebungsbedingungen zu berücksichtigen, beispielsweise die Geometrie des Sensorgehäuses 220, die Position des Sensorgehäuses 220 in Bezug auf das Behältnis 114 (das heißt beispielsweise in das Medium 110 reinragend oder nicht, wie weit reinragend), Anordnung oder Geometrie gegenüber der Strömung des Mediums 110, die Wärmeleitung zwischen der Wand des Behältnisses 114, z.B. der Rohrleitung, und dem Sensorgehäuse, den Wärmeübergang zwischen dem Sensorgehäuse 220 und dem Temperatursensorelement 120, den Wärmetransport durch das strömende oder ruhende Medium 110 und/oder der Wärmeübergang zwischen dem Medium 110 und dem Behältnis 114 bzw. der weiteren Umgebung.

In Fig. 2B ist gegenüber dem Ausführungsbeispiel gemäß Fig. 2A der Wärmeübergang zwischen dem Medium 110 und dem Sensorgehäuse 220, der Wärmetransport bzw. die Wärmeleitfähigkeit des Sensorgehäuses 220, und der Wärmeübergang zwischen dem Sensorgehäuse 220 und dem Temperatursensorelement 120 in dem Korrekturmodell zu berücksichtigen (thermische Kopplung des Temperatursensorelements 120 mit dem Medium 110 über das Sensorgehäuse 220).

Generell sind auch weitere Ausführungsbeispiele mit dem Gehäuse 220 möglich, die die verschiedenen thermischen Kopplungen, wie sie anhand der Fig. 1A bis 1C erläutert wurden, das heißt auch mit der Verwendung anderer thermisch leitfähiger Materialien bzw. von Materialien, die eine Öffnung in dem Sensorgehäuse 220 abdichten, möglich.

Wie schon anhand des Ausführungsbeispiels des Temperatursensorelements gemäß Fig. 1C beschrieben, können insbesondere Ausführungsbeispiele gemäß Fig. 2B sehr einfach implementiert werden, da das Temperatursensorelement 120 in dem Gehäuse 220 angeordnet bzw. eingebettet ist und daher keine zusätzlichen undichten Stellen aufgrund des Temperatursensorelements 120 beachtet bzw. abgedichtet werden müssen. Es ist lediglich darauf zu achten, dass die Übergänge zwischen dem Sensorgehäuse 220 und der Wand des Behältnisses 114 ausreichend dick und dicht sind.

Fig. 2C zeigt ein drittes Beispiel eines Sensors mit einem Sensorgehäuse 220 und einem Temperatursensor. Gegenüber dem Ausführungsbeispiel gemäß Fig. 2B weist das Ausführungsbeispiel gemäß Fig. 2C einen Temperatursensor mit einem weiteren bzw. zweiten Temperatursensorelement 120' auf. Damit kann der Temperatursensor die Temperaturen an zwei Temperatursensorelementen und damit an zwei verschiedenen räumlichen Positionen messen und basierend auf diesen beiden Temperaturen und dem Korrekturmodell 131 die Temperatur des Mediums 110 bestimmen. Dabei werden in dem Korrekturmodell die Umgebungsbedingungen für beide Temperatursensorelemente 120, 120' berücksichtigt.

In einem weiteren Ausführungsbeispiel gemäß der Fig. 2C ist das Korrekturmodell 131 so ausgebildet, dass es aufgrund der zwei verschiedenen Messungen an den zwei Temperatursensorelementen 120 und 120' eine Voraussage der Temperatur des Mediums 110 ermöglicht. Ferner kann das Korrekturmodell so definiert sein, dass aufgrund der zwei verschiedenen Temperaturen an den zwei verschiedenen Temperatursensorelementen 120 und 120' und der Kenntnis der Strömungsbedingungen des Mediums 110 in dem Behältnis 114 beispielsweise eine Temperaturverteilung in dem Medium bestimmt werden kann, oder in anderen Worten, Temperaturen des Mediums an verschiedenen Stellen innerhalb des Behältnisses bestimmt werden können.

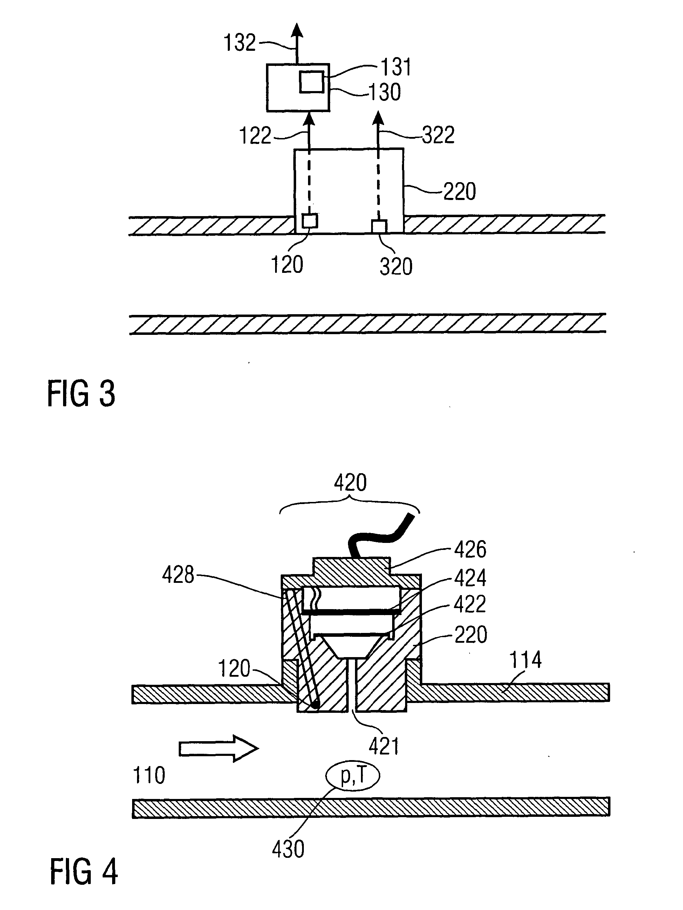

Fig. 3 zeigt ein Ausführungsbeispiel eines Sensors mit einem Sensorgehäuse 220 und einem Temperatursensor, wie er beispielsweise in den Fig. 1A bis 1C bzw. 2A bis 2C beschrieben wurde, und zumindest einem weiteren Sensorelement 320, das zur Messung einer anderen physikalischen Größe, das heißt nicht der Temperatur, dient. Solche weiteren physikalischen Größen des Mediums 110, die durch das Sensorelement 320 gemessen werden können, sind z.B. der Druck des Mediums 110, oder die Strömung.

Entsprechend kann ein Ausführungsbeispiel gemäß der Fig. 3 auch als kombinierter Sensor bezeichnet werden, der einen Temperatursensor mit einem anderen Sensor, beispielsweise einem Strömungssensor, Luftmassensensor oder Drucksensor in einem Gehäuse 220 kombiniert.

Das weitere Sensorelement 320 erzeugt beispielsweise ein weiteres Sensorsignal 322, das durch andere Funktionseinheiten verwendet werden kann. Analog können weitere Sensorelemente verwendet werden, oder Mehrfachsensorelemente oder z.B. Sensorcluster.

In einem weiteren Ausführungsbeispiel gemäß Fig. 3 kann beispielsweise auch das weitere Sensorsignal 322 der Schaltung 130 zugeführt werden, um diese zusätzliche Messgröße, z. B. Druck oder Strömungsgeschwindigkeit, in die Bestimmung der Temperatur bzw. der Temperaturverteilung oder Temperaturvorhersage in dem Korrekturmodell zu verwenden.

Fig. 4 zeigt ein Ausführungsbeispiel eines kombinierten Temperatur-Druck-Sensors. Aufgrund der Verwendung des Korrekturmodells kann das Ausführungsbeispiel in Fig. 4 auch als Ausführungsbeispiel eines "modellbasierten Sensorsystems für die Erfassung von Druck und Temperatur" bezeichnet werden.

Fig. 4 zeigt einen Sensor 420 mit einem Sensorgehäuse 220, einer Druckmesszelle 422, einer Leiterplatte 424, einem Deckel mit Kabelanschluss 426, einem Sackloch 428 und einem Temperatursensorelement 120. Der Sensor 420 ist in einer Öffnung einer Rohrleitung 114, z.B. für eine Klimaanlage, angeordnet, und ragt geringfügig in das Medium 110 hinein. In dem Ausführungsbeispiel gemäß Fig. 4 ist das Medium 110 ein strömendes Medium, was durch den Pfeil innerhalb der Rohrleitung 114 dargestellt wird. Der Sensor 420 ist ausgebildet, die physikalischen Größen 430 Temperatur T und den Druck p des Mediums 110 zu messen.

Die Öffnung 421, die Druckmesszelle 422 und die Leiterplatte 424 bilden zusammen mit dem Gehäuse 420 einen Drucksensor, der das aus der Druckmessung resultierende Drucksensorsignal über den Deckel mit Kabelanschluss 426 weitergibt.

In das Gehäuse 420 ist ein Sackloch 428 eingebracht worden, in dem das Temperatursensorelement 120 eingeführt wird bzw. angeordnet ist. Dabei ist das Sackloch 428 so erzeugt worden, dass das Temperatursensorelement 120 möglichst nah an das Medium 110 geführt wird, jedoch nicht direkt mit dem Medium 110 thermisch gekoppelt ist, sondern über das Sensorgehäuse 420 mit dem Medium 110 thermisch gekoppelt ist. Die verbleibende Sensorgehäusewand zwischen dem Temperatursensorelement 120 und dem Medium 110 wird dabei so dünn wie möglich gewählt, um eine möglichst gute thermische Kopplung zu ermöglichen, jedoch ausreichend dick gewählt, um einen Austritt des Mediums 110 über das Sackloch 428 in die weitere Umgebung zu vermeiden.

Wie zuvor dargelegt, kann das Temperatursensorelement 120 ein NTC- oder PTC-Element oder ein anderes temperatursensitives Sensorelement sein, wobei die Anschlussdrähte eines solchen Temperatursensorelements beispielweise über das Sackloch 428 an den Deckel mit Kabelanschluss 426 geführt werden können, um auch das Temperatursensorsignal 122 über den Deckel mit Kabelanschluss 426 an die Schaltung 130, die in Fig. 4 nicht gezeigt ist, zu übertragen.

Das Sackloch 428 kann beispielsweise durch eine Bohrung erzeugt werden, und die Position des Sacklochs dabei so gewählt werden, dass beispielsweise diese Bohrung möglichst einfach durchgeführt werden kann.

In weiteren Ausführungsbeispielen wird daher das Gehäuse 220 bzw. der Sensor 420 so konzipiert, dass beispielsweise ein solches Sackloch 428 möglichst einfach erzeugt werden kann bzw. in der Herstellung des Sensors 420 möglichst einfach realisiert werden kann.

Bei Ausführungsbeispielen der vorliegenden Erfindung können dabei bekannte Drucksensor (oder andere Sensoren) mit dem Sensorgehäuse 220, der Druckmesszelle 422, der Leiterplatte 424 und dem Deckel mit Kabelanschluss 426 verwendet werden, um über ein über das Sackloch 428 zusätzlich ein Temperatursensorelement 120 zu integrieren, und somit einen kombinierten Druck-Temperatur-Sensor zu schaffen.

Bei anderen Ausführungsbeispielen der vorliegenden Erfindung können neu zu entwerfende Sensoren gleich so konzipiert werden, dass sie von Beginn an ein Sackloch aufweisen, um wahlweise das Temperatursensorelement bei Auslieferung vorkonfiguriert mitliefern zu können oder dieses später einfach nachrüsten zu können.

Das Korrekturmodell 131, auf dessen Basis die Schaltung 130 die Temperatur des Mediums 110 bestimmt, berücksichtigt beispielsweise, wie schon anhand der Fig. 2A bis 2C (bzw.
Fig. 3) erläutert, Umgebungsbedingungen wie z.B. eine Umgebungstemperatur, eine Geometrie des Behältnisses 114, eine Geometrie des Sensorgehäuses 220, eine Position des Sensorgehäuses 220 in Bezug auf das Behältnis 114 oder das Medium 110, eine Wärmeleitung zwischen dem Behältnis 114 und dem Sensorgehäuse 220, eine Wärmeleitung zwischen dem Sensorgehäuse 220 und dem Temperatursensorelement 120, ein Wärmetransport durch das strömende oder ruhende Medium 110 oder eine Wärmeübertragung zum Behältnis 114, und insbesondere die thermische Kopplung des Temperatursensorelements 120 mit dem Medium 110 über das Sensorgehäuse 220.

Damit zeigt das Ausführungsbeispiel gemäß Fig. 4 ein effizientes Verfahren, um einen bekannten Drucksensor um eine Temperaturmessfähigkeit zu ergänzen.

Alternativ kann das Sackloch entfallen und das Temperatursensorelement an einer beliebigen Stelle im Sensorgehäuse 220, z.B. auf einer Schaltungsplatine (PCB - Printed Circuit Board) oder anderen Schaltungsträgern aufgebracht werden.

In anderen Worten, ein neuartiger Lösungsansatz eines Ausführungsbeispiels in Analogie zu Fig. 4 besteht darin, die Temperaturmessung in einem ebenfalls im System benötigten Drucksensor außerhalb des strömenden oder ruhenden Mediums an einer (oder mehreren) fertigungstechnischen günstigen Stelle(n) zu positionieren und auf Basis von simulativen Untersuchungen verschiedener Einbaubedingungen für den Druck-Temperatursensor Korrekturkennfelder in Abhängigkeit der aktuell gemessenen Temperatur(en) zu ermitteln. Diese können in der intelligenten Auswerteelektronik bzw. Schaltung 130 hinterlegt werden, um im Betrieb eine Rückrechnung auf den tatsächlichen Temperaturwert des Mediums 110 zu erlauben.

Fig. 4 zeigt damit schematisch eine typische Einbaubedingung eines Druck-Temperatursensors und eine mögliche Variante der zuvor beschriebenen Lösung.

Für die Umsetzung dieses Lösungskonzepts bzw. zur Erstellung des Korrekturmodells sind im ersten Schritt Modelle unterschiedlicher Abstraktionen notwendig. Detaillierte FEM-Modelle (Finite Elemente Modelle) der Geometrie des Sensors, z. B. die in Fig. 4 gezeigte Geometrie, werden zur Untersuchung von Geometrievarianten, zur Positionierung des Temperatursensors und insbesondere zu der genauen Erfassung des Einflusses von Einbausituationen und Umgebungsbedingungen herangezogen und dienen somit zur präzisen Ermittlung der benötigten Kennfelder. Dabei kann beispielsweise wie folgt vorgegangen werden:

In der "Verhaltensmodellierung" erfolgt die Erstellung parametrischer FEM-Modelle für die Erfassung der relevanten physikalischen Effekte sowie wesentlicher Randbedingungen. Dabei werden im Wesentlichen die Folgenden physikalischen Effekte durch das Modell erfasst: Wärmeleitung im Sensorgehäuse und zwischen Rohrleitung und Sensor, Wärmetransport durch das strömende oder in Ruhe befindliche Medium und Wärmeübergang zur Umgebung. Die genannten Effekte stellen gleichermaßen Einflussfaktoren dar, hinsichtlich derer das Verhalten des Sensorsystems in der Simulation untersucht wird, um den Einfluss dieser Effekte auf die Abweichung zwischen dem an dem Temperatursensorelement 120 gemessenen Temperatur und der Temperatur des Mediums 110 möglichst genau bestimmen zu können.

In der "Verhaltenssimulation" folgt die Durchführung umfassender Simulationsstudien für Geometrievarianten und Randbedingungen. Im Rahmen der Simulationsstudien werden zunächst prinzipielle Abhängigkeiten des Systemverhaltens von den oben genannten Einflussfaktoren ermittelt. Auf Basis dieser Daten kann ein Simulationsplan erstellt werden, der den für die Ermittlung der Kennfelder notwendigen Parameterraum gut erfasst, gleichzeitig aber auf Rechenzeit-Randbedingungen berücksichtigt.

Darauf folgt die "Datenauswertung und Ermittlung von Kennfeldern für die Messwert-Korrektur". Ergebnis der "FEM-Simulation" sind Rohdaten, die hinsichtlich der relevanten Zusammenhänge analysiert werden müssen. Dazu gehören u.a. die Untersuchung von Schnittebenen und Unterräumen hinsichtlich einer Entkopplung von Effekten sowie eine Konzeption zur Datenreduktion.

In der "Modellierung/Approximation der Kennfelder durch geeignete Ansatzfunktionen" werden auf Basis der Datenauswertung Ansatzfunktionen für die Kennfeld-Korrektur ermittelt, die den Besonderheiten der abzubildenden Daten sowie den eingeschränkten Ressourcen einer kostengünstigen Hardware-Realisierung gleichermaßen Rechnung trägt.

Im Ergebnis entsteht ein "Verhaltensmodell", das für jede gemessene Temperatur die zugehörigen Temperaturen im Medium, aber auch in der Umgebung des Sensors errechnet, und welches z.B. in einem im Sensor integrierten Mikrocontroller implementiert werden kann. Darüber hinaus kann über eine dynamische Bewertung (ebenfalls im Mikrocontroller) der Änderung der Temperatur eine Aussage über die Änderung des Temperaturverhaltens im Medium getroffen werden, und damit die Ansprechzeit der Temperaturmessung virtuell oder real erhöht werden, bis hin zu einer Voraussage des Temperaturverlaufes.

Fig. 5 zeigt ein Ablaufdiagramm eines Ausführungsbeispiels für ein Verfahren zum Erstellen des Korrektur-Kennfeldes.

In Schritt 510 (FEM-Simulation) wird für die FEM-Simulation eine Analyse von Geometrievarianten, der Sensorpositionierung und einer Kennfeld-Ermittlung durchgeführt, sowie auf Basis der Sensorgeometrie die FEM-Simulation durchgeführt. Ergebnis der FEM-Simulation können für die Verhaltensmodellierung 520 verwendet werden, und für die Bestimmung der Kennfelder bzw. der Optimierung der Sensorgeometrie verwendet werden.

Nach der Verhaltensmodellierung 520 wird eine Verhaltenssimulation 530 durchgeführt, die eine Analyse des Sensors und der Elektronik , eine Sensitivitätsanalyse und/oder eine Monte-Carle-Simulation umfassen kann. Ergebnis der Verhaltenssimulation 530 ist weiteres Feedback für das Sensordesign sowie Informationen, die für die Modellabstraktion 540 verwendet werden können.

Basierend auf der Modellabstraktion 540 wird eine Systemsimulation 550 durchgeführt, die eine Simulation von Teilsystemen, der Klimaanlage bzw. des Gesamtsystems umfasst und unter Bedingungen der Systemintegration durchgeführt wird.

Ein Vorteil von Ausführungsbeispielen der beschriebenen Lösung besteht zum Einen in einer Temperaturmessung ohne Beeinflussung des Mediumstroms, dabei können im Vergleich zum Stand der Technik geringere bzw. deutlich geringere Ansprechzeiten erzielt werden.

Zum Anderen ermöglichen Ausführungsbeispiele der vorliegenden Erfindung eine Implementierung von Temperaturmessungen in Drucksensoren oder Sensoren für andere physikalischen Größen ohne wesentlichen konstruktiven und fertigungstechnischen Zusatzaufwand.

Durch die verbundene intelligente Signalaufbereitung und - auswertung in der Schaltung 130 sind wesentlich komplexere Aussagen über das Systemverhalten, z.B. Temperaturgradient im System, und das Verhalten des zu messenden Mediums möglich als bei alleiniger Messwerterfassung.

Dabei stellen Ausführungsbeispiele der vorliegenden Erfindung Wirkprinzipien, bei denen eine Ermittlung der Temperatur eines strömenden oder ruhenden Mediums erfolgt, der Sensor an einer Stelle "außerhalb" des Mediums angeordnet ist, und mit Hilfe einer modellbasierten Korrekturfunktion eine Rückrechnung auf die tatsächliche Temperatur des Mediums erfolgt.

Mögliche technische Anwendungsgebiete von Ausführungsbeispielen der vorliegenden Erfindung sind beispielsweise R744-Klimaanlagen, Hydrauliksysteme, Messtechnik für verfahrenstechnische Prozesse und/oder Prozessüberwachung.

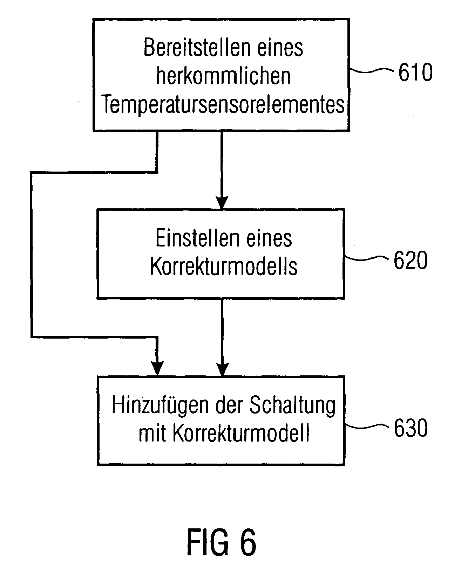

Fig. 6 zeigt ein Ablaufdiagramm eines Ausführungsbeispiels eines Verfahrens zum Herstellen eines Temperatursensors zur verbesserten Bestimmung einer Temperatur eines Mediums mit einem Temperatursensorelement, das mit dem Medium thermisch gekoppelt werden kann. Oder anders ausgedrückt, ermöglichen Ausführungsbeispiele des Verfahrens die Temperaturmessung mittels bekannter Temperatursensorelemente bzw. Temperatursensorsysteme unter Berücksichtigung ihrer Umgebungsbedingungen zu verbessern, d.h. die Abweichung zwischen der Temperatur an dem Temperatursensorelement 120 und der Temperatur des Mediums 110 gegenüber der Abweichung der zuvor bekannten Temperatursensorelemente bzw. Temperatursensorsysteme zu verringern.

Schritt 610 beinhaltet das Bereistellen eines bekannten bzw. herkömmlichen Temperatursensorelements.

Schritt 620 beinhaltet das Erstellen eines Korrekturmodells, durch das eine Abweichung zwischen einer Temperatur und dem Temperatursensorelement und der Temperatur des Mediums, die durch mindestens eine Umgebungsbedingung bedingt ist, reduziert wird.

Schritt 630 beinhaltet das Hinzufügen einer Schaltung zu dem Temperatursensor bzw. Temperatursensorelement, wobei die Schaltung ausgebildet ist, basierend auf der Temperatur an dem Temperatursensorelement und dem Korrekturmodell die verbesserte Bestimmung der Temperatur des Mediums zu ermöglichen.

Dabei ist der Schritt 620 (Erstellen eines Korrekturmodells) für ein System, das heißt, den gleichen Temperatur-sensor bzw. gleiche Temperatursensorelement, das in gleicher Art in ein identisches Behältnis eingebracht wird, nur einmal durchzuführen. In anderen Worten, bei gleichen System- bzw. Umgebungsbedingungen kann das gleiche Korrekturmodell verwendet werden, so dass nach dem einmaligen Erstellen eines Korrekturmodells für die Implementierung eines verbesserten Korrektursensors nur noch der herkömmliche Temperatursensor bereitgestellt werden braucht, und um die Schaltung mit dem entsprechenden Korrekturmodell ergänzt wird.

Wie zuvor beschrieben, ermöglicht dies sowohl die Nachrüstung bzw. Verbesserung von bestehenden Temperatursensor-Installationen wie auch die effiziente Verbesserung von herkömmlichen Temperatursensoren, um diese als derart verbesserte Temperatursensoren für Neuinstallationen zu verwenden.

Entsprechend können Datenbanken mit den entsprechenden Korrekturmodellen für verschiedenste System- bzw. Umgebungsbedingungen vorgehalten werden, die bei Bedarf sofort zur Verfügung stehen.

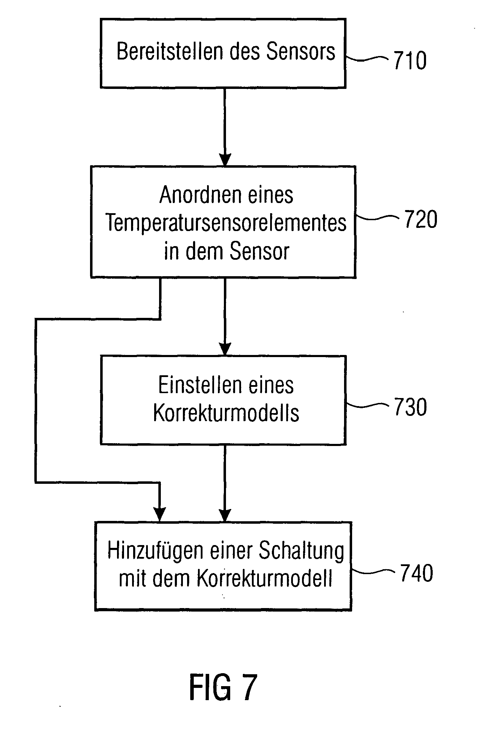

Fig. 7 zeigt ein Ablaufdiagramm eines Ausführungsbeispiels für ein Verfahren zum Herstellen eines Sensors, der zusätzlich eine Temperatur eines Mediums bestimmen kann. Oder in anderen Worten, ein Verfahren zum Erweitern eines herkömmlichen bzw. bestehenden Sensors, um eine Temperaturmessfunktion.

Schritt 710 beinhaltet das Bereitstellen des bestehenden Sensors, z.B. eines Drucksensors mit einem Sensorgehäuse 220.

Schritt 720 beinhaltet das Anordnen eines Temperatursensorelements in dem bestehenden Sensor, z.B. über ein Sackloch 428.

Schritt 730 beinhaltet das Erstellen eines Korrekturmodells, durch das eine Abweichung zwischen einer Temperatur an dem Temperatursensorelement und der Temperatur des Mediums, die durch eine mindestens eine Umgebungsbedingung bedingt ist, reduziert wird.

Schritt 740 beinhaltet das Hinzufügen einer Schaltung, die ausgebildet ist, basierend auf der Temperatur an dem Temperatursensorelement und dem in Schritt 730 erstellen Korrekturmodell, die Bestimmung der Temperatur des Mediums zu ermöglichen.

Dabei braucht der Schritt 730 (Erstellen eines Korrekturmodells) in Analogie zu dem Ausführungsbeispiel gemäß Fig. 6 nur einmal durchgeführt werden, um das Korrekturmodell für gleiche oder ähnliche System-Umgebungsbedingungen wieder verwenden zu können.

Dabei kann das Erstellen des Korrekturmodells, wie anhand von Fig. 5 beschrieben, das Auswerten und Simulieren von verschiedensten Anordnungen des Temperatursensorelements in dem herkömmlichen Sensor beinhalten, um eine bestmögliche Temperaturmessung in Bezug auf Genauigkeit der Temperaturmessung und der damit verbunden Kosten bzw. Aufwände zu erreichen.

Abhängig von den Gegebenheiten können die Ausführungsbeispiele der erfindungsgemäßen Verfahren in Hardware, in Software oder einer Kombination aus Hardware und Software implementiert werden. Die Implementierung kann auf einem digitalen Speichermedium, insbesondere einer Diskette, CD oder DVD mit elektronisch auslesbaren Steuersignalen erfolgen, die so mit einem programmierbaren Computersystem zusammenwirken, das eines der Ausführungsbeispiele der erfindungsgemäßen Verfahren ausgeführt wird. Allgemein bestehen die Ausführungsbeispiele der vorliegenden Erfindung somit auch in Software-Programm-Produkten, bzw. Computer-Programm-Produkten bzw. Programm-Produkten mit einem auf einen maschinenlesbaren Träger gespeicherten Programmcode zur Durchführung eines der Ausführungsbeispiele der erfindungsgemäßen Verfahren, wenn eines der Software-Programm-Produkte auf einem Rechner oder einem Prozessor abläuft. In anderen Worten ausgedrückt, kann ein Ausführungsbeispiel der vorliegenden Erfindung somit als ein Computer-Programm bzw. Software-Programm bzw. Programm mit einem Programmcode zur Durchführung eines Ausführungsbeispiels eines erfindungsgemäßen Verfahrens realisiert werden, wenn das Programm auf einem Prozessor abläuft.

Der Prozessor kann hierbei von einem Computer, einem Mikroprozessor, einer Chipkarte, einem digitalen Signalprozessor, einer Prozessorimplementierung auf FPGA-Basis oder auf anderen programmierbaren Komponenten, sowie aus Kombinationen der genannten oder einem anderen integrierten Schaltkreis gebildet sein.

## Patentansprüche

1. Temperatursensor zum Bestimmen einer Temperatur eines Mediums (110), mit folgenden Merkmalen:
einem Temperatursensorelement (120); und
einer Schaltung (130), die ausgebildet ist, um basierend auf einer Temperatur an dem Temperatursensorelement (120) und zumindest einer Umgebungsbedingung, die eine thermische Kopplung zwischen dem Temperatursensorelement (120) und dem Medium (110) beeinflusst, die Temperatur des Mediums zu bestimmen.

2. Temperatursensor nach Anspruch 1, bei dem die Schaltung (130) ausgebildet ist, um die Temperatur des Mediums (110) basierend auf der Temperatur an dem Temperatursensorelement (120) und einem Korrekturmodell (131) zu bestimmen, wobei mittels des Korrekturmodells (131) eine Abweichung zwischen der Temperatur an dem Temperatursensorelement (120) und der Temperatur des Mediums (110), die durch die zumindest eine Umgebungsbedingung bedingt ist, reduziert wird.

3. Temperatursensor nach Anspruch 2, wobei mittels des Korrekturmodells eine Abweichung zwischen der Temperatur an dem Temperatursensorelement (120) und der Temperatur des Mediums (110), die durch mehr als eine Umgebungsbedingung bedingt ist, reduziert wird.

4. Temperatursensor nach Anspruch 2 oder 3, bei dem das Temperatursensorelement (120) ausgebildet ist, um ein der Temperatur an dem Temperatursensorelement entsprechendes Sensorsignal (122) zu erzeugen; und
bei dem die Schaltung (130) ausgebildet ist, die Temperatur des Mediums (110) basierend auf dem Sensorsignal (122) des Temperatursensorelements und dem Korrekturmodell (130) zu bestimmen.

5. Temperatursensor nach einem der Ansprüche 1 bis 4, bei dem die Schaltung einen Mikroprozessor, eine Chipkarte, einen digitalen Signalprozessor, eine Prozessorimplementierung auf FPGA-Basis oder auf Basis anderer programmierbarer Komponenten, oder Kombinationen der genannten oder einen anderen integrierten Schaltkreis umfasst.

6. Temperatursensor nach einem der Ansprüche 1 bis 5, wobei das Medium flüssig oder gasförmig ist.

7. Temperatursensor nach Anspruch 6, wobei sich das Medium in einem Behältnis befindet oder sich durch ein Behältnis bewegt.

8. Temperatursensor nach Anspruch 7, bei dem das Behältnis ein Leitungsrohr ist.

9. Temperatursensor nach Anspruch 7 oder 8, wobei eine Umgebungsbedingung eine Umgebungstemperatur, eine Geometrie des Behältnisses (114), eine Geometrie des Temperatursensorelements (120), eine Position des Temperatursensors (120) in Bezug auf das Behältnis (114), eine Position des Temperatursensors (120) in Bezug auf das Medium (110), ein Wärmeleitung zwischen Behältnis (114) und Temperatursensorelement (120), ein Wärmetransport durch das strömende oder ruhende Medium (110) oder ein Wärmeübergang zum Behältnis (114) ist.

10. Temperatursensorelement nach einem der Ansprüche 7 bis 9, bei dem das Temperatursensorelement (120) direkt mit dem Medium (110) gekoppelt ist, und eine Umgebungsbedingung ein Wärmeübergang zwischen dem Medium (110) und dem Temperatursensorelement (120) ist.

11. Temperatursensor nach einem der Ansprüche 7 bis 9, bei dem das Temperatursensorelement (120) über das Behältnis (114) mit dem Medium (110) thermisch gekoppelt ist.

12. Temperatursensor nach einem der Ansprüche 7 bis 9, bei dem das Temperatursensorelement (120) über zumindest ein weiteres Material, das thermisch leitend ist, mit dem Medium (110) thermisch gekoppelt ist, und eine Umgebungsbedingung eine Wärmeleitung des weiteren Materials ist.

13. Sensor mit einem Sensorgehäuse (220) und einem Temperatursensor nach Anspruch 7 oder 8, wobei der Sensor derart angeordnet ist, dass das Sensorgehäuse mit dem Medium (110) thermisch direkt gekoppelt ist.

14. Sensor nach Anspruch 13, wobei eine Umgebungsbedingung eine Umgebungstemperatur, eine Geometrie des Behältnisses (114), eine Geometrie des Sensorgehäuses (220), eine Position des Sensorgehäuses (220) in Bezug auf das Behältnis (114) oder das Medium (110), eine Wärmeleitung zwischen dem Behältnis (114) und dem Sensorgehäuse (220), eine Wärmeleitung zwischen dem Sensorgehäuse (220) und dem Temperatursensorelement (120), ein Wärmetransport durch das strömende oder ruhende Medium (110), eine Wärmeübertragung zum Behältnis (114), ein Wärmeaustausch zwischen Behältnis (114) und Umgebung oder ein Wärmeaustausch zwischen Sensorgehäuse (220) und Umgebung ist.

15. Sensor nach Anspruch 13 oder 14, bei dem das Temperatursensorelement (120) derart in dem Sensorgehäuse (220) angeordnet ist, dass das Temperatursensorelement (120) mit dem Medium (110) thermisch direkt gekoppelt ist und eine Umgebungsbedingung auch ein Wärmeübergang zwischen dem Medium (110) und dem Temperatursensorelement (120) sein kann.

16. Sensor nach Anspruch 13 oder 14, bei dem das Temperatursensorelement (120) derart in dem Sensorgehäuse (220) angeordnet ist, dass das Temperatursensorelement (120) über das Sensorgehäuse (220) mit dem Medium (110) thermisch gekoppelt ist.

17. Sensor nach einem der Ansprüche 13 bis 16, bei dem der Temperatursensor zumindest ein weiteres Temperatursensorelement (120') aufweist, und die Schaltung ausgebildet ist, um basierend auf einer Temperatur an dem Temperatursensorelement (120) und zumindest einer Umgebungsbedingung des Temperatursensorelements (120), die eine thermische Kopplung zwischen dem Temperatursensorelement (120) und dem Medium (110) beeinflusst, und basierend auf einer Temperatur an dem weiteren Temperatursensorelement (120') und zumindest einer Umgebungsbedingung des zumindest einen weiteren Temperatursensorelement (120'), die eine thermische Kopplung zwischen dem zumindest einen weiteren Temperatursensorelement (120') und dem Medium (110) beeinflusst, die Temperatur des Mediums (110) zu bestimmen.

18. Sensor nach Anspruch 17, bei dem das Temperatursensorelement (120) und das zumindest eine weitere Temperatursensorelement (120') derart angeordnet sind und bei dem die Schaltung (130) ausgebildet ist, um basierend auf der Temperatur an dem Temperatursensorelement (120) und der zumindest einen Umgebungsbedingung des Temperatursensorelements (120), und basierend auf der Temperatur an dem zumindest einen weiteren Temperatursensorelement (120') und der zumindest einen Umgebungsbedingung des zumindest einen weiteren Temperatursensorelement (120') die Temperatur des Mediums vorherzusagen und/oder eine räumliche Verteilung der Temperatur innerhalb des Mediums zu bestimmen.

19. Sensor nach einem der Ansprüche 13 bis 18, der zumindest ein weiteres Sensorelement zur Messung zumindest einer weiteren physikalischen Größe, die keine Temperatur ist, aufweist.

20. Sensor nach Anspruch 19, bei dem das weitere Sensorelement ein Drucksensorelement ist, und zur Messung des Drucks des Mediums dient.

21. Verfahren zum Bestimmen einer Temperatur eines Mediums mit:
Erfassen einer Temperatur an einem Temperatursensorelement; und
Bestimmen der Temperatur des Mediums basierend auf einer Temperatur an dem Temperatursensorelement (120) und zumindest einer Umgebungsbedingung, die eine thermische Kopplung zwischen dem Temperatursensorelement (120) und dem Medium (110) beeinflusst.

22. Verfahren nach Anspruch 21, bei dem das Bestimmen der Temperatur des Mediums basierend auf der Temperatur an dem Temperatursensorelement (120) und einem Korrekturmodell erfolgt, wobei mittels des Korrekturmodells eine Abweichung zwischen der Temperatur an dem Temperatursensorelement (120) und der Temperatur des Mediums (110), die durch die zumindest eine Umgebungsbedingung bedingt ist, reduziert wird.

23. Verfahren nach Anspruch 22, wobei mittels Korrekturmodells eine Abweichung zwischen der Temperatur an dem Temperatursensorelement (120) und der Temperatur des Mediums (110), die durch mehr als eine Umgebungsbedingung bedingt ist, reduziert wird.

24. Verfahren nach Anspruch 22 oder 23, bei dem das Erfassen der Temperatur an dem Temperatursensorelement (120) ein Erzeugen ein der Temperatur an dem Temperatursensorelement entsprechendes Sensorsignal (122) umfasst; und
das Bestimmen der Temperatur des Mediums (110) basierend auf dem Sensorsignal (122) des Temperatursensorelements (120) und dem Korrekturmodell (130) erfolgt.

25. Verfahren nach einem der Ansprüche 21 bis 24, wobei das Medium flüssig oder gasförmig ist.

26. Verfahren nach Anspruch 25, wobei sich das Medium in einem Behältnis befindet oder durch ein Behältnis (114) strömt.

27. Verfahren nach Anspruch 26, bei dem das Behältnis ein Leitungsrohr ist.

28. Verfahren nach Anspruch 26 oder 27, wobei eine Umgebungsbedingung eine Geometrie des Behältnisses (114), eine Geometrie des Temperatursensorelements (120), eine Position des Temperatursensors (120) in Bezug auf das Behältnis (114), eine Position des Temperatursensors (120) in Bezug auf das Medium (110), ein Wärmeleitung zwischen Behältnis (114) und Temperatursensorelement (120), ein Wärmetransport durch das strömende oder ruhende Medium (110), ein Wärmeübergang zum Behältnis (114), ein Wärmeaustausch zwischen Behältnis (114) und Umgebung oder ein Wärmeaustausch zwischen Sensorgehäuse (220) und Umgebung ist.

29. Verfahren nach einem der Ansprüche 26 bis 28, wobei das Temperatursensorelement (120) derart in dem Sensorgehäuse (220) angeordnet ist, dass das Temperatursensorelement (120) direkt mit dem Medium (110) gekoppelt ist, und eine Umgebungsbedingung ein Wärmeübergang zwischen dem Medium (110) und dem Temperatursensorelement (120) ist.

30. Verfahren nach einem der Ansprüche 26 bis 28, wobei das Temperatursensorelement (120) derart in dem Sensorgehäuse (220) angeordnet ist, dass das Temperatursensorelement (120) über das Sensorgehäuse (220) mit dem Medium (110) thermisch gekoppelt ist.

31. Verfahren nach einem der Ansprüche 26 bis 28, wobei das Temperatursensorelement (120) derart in dem Sensorgehäuse (220) angeordnet ist, dass das Temperatursensorelement (120) über zumindest ein weiteres Material, das thermisch leitend ist, mit dem Medium (110) thermisch gekoppelt ist, und eine Umgebungsbedingung eine Wärmeleitung des zumindest einen weiteren Materials ist.

32. Verfahren nach einem der Ansprüche 21 bis 31, bei dem der Temperatursensor zumindest ein weiteres Temperatursensorelement (120') aufweist, und das Bestimmen der Temperatur des Mediums (110) basierend auf einer Temperatur an dem Temperatursensorelement (120) und zumindest einer Umgebungsbedingung des Temperatursensorelements (120), die eine thermische Kopplung zwischen dem Temperatursensorelement (120) und dem Medium (110) beeinflusst, und basierend auf einer Temperatur an dem zumindest einen weiteren Temperatursensorelement (120') und zumindest einer Umgebungsbedingung des zumindest einen weiteren Temperatursensorelement (120'), die eine thermische Kopplung zwischen dem zumindest einen weiteren Temperatursensorelement (120') und dem Medium (110) beeinflusst, erfolgt.

33. Verfahren nach Anspruch 32, bei dem das Temperatursensorelement (120) und das zumindest eine weitere Temperatursensorelement (120') derart angeordnet sind, und das Bestimmen der Temperatur des Mediums (110) eine Vorhersage der Temperatur des Mediums und/oder ein Bestimmen einer räumlichen Verteilung der Temperatur innerhalb des Mediums umfasst, die basierend auf der Temperatur an dem Temperatursensorelement (120) und der zumindest einen Umgebungsbedingung des Temperatursensorelements (120), und basierend auf der Temperatur an dem zumindest einen weiteren Temperatursensorelement (120') und der zumindest einen Umgebungsbedingung des zumindest einen weiteren Temperatursensorelements (120') erfolgt.

34. Verfahren zum Herstellen eines Temperatursensors zur verbesserten Bestimmung einer Temperatur eines Mediums, mit einem Temperatursensorelement (120), das mit dem Medium thermisch gekoppelt werden kann, mit:
Hinzufügen einer Schaltung zu dem Temperatursensorelement, wobei die Schaltung (130) ausgebildet ist, um basierend auf der Temperatur an dem Temperatursensorelement (120) und einem Korrekturmodell (131), durch das eine Abweichung zwischen einer Temperatur an dem Temperatursensorelement (120) und der Temperatur des Mediums (110), die durch mindestens eine Umgebungsbedingung bedingt ist, reduziert wird, die verbesserte Bestimmung der Temperatur des Mediums (110) zu ermöglichen.

35. Verfahren nach Anspruch 34, mit zusätzlich:
Erstellen des Korrekturmodells (131).

36. Verfahren zum Herstellen eines Sensors mit einem Sensorgehäuse (220), der zusätzlich eine Temperatur eines Mediums bestimmen kann, mit:
Bereitstellen (710) des Sensors;
Anordnen (720) eines Temperatursensorelements (120) in dem Sensorgehäuse (220); und
Hinzufügen (740) einer Schaltung (130), wobei die Schaltung ausgebildet ist, um basierend auf der Temperatur an dem Temperatursensorelement (120) und dem Korrekturmodell (131), durch das eine Abweichung zwischen einer Temperatur an dem Temperatursensorelement (120) und der Temperatur des Mediums (110), die durch mindestens eine Umgebungsbedingung bedingt ist, reduziert wird, die Temperatur des Mediums (110) zu bestimmen.

37. Verfahren nach Anspruch 36, mit zusätzlich:
Erstellen (730) des Korrekturmodells.

38. Verfahren nach Anspruch 36 oder 37, bei dem das Temperatursensorelement (120) derart in dem bestehenden Sensorgehäuse (220) angeordnet ist, dass das Temperatursensorelement über das Sensorgehäuse (220) mit dem Medium (110) thermisch gekoppelt ist.

39. Verfahren nach Anspruch 38, bei dem das Anordnen des Temperatursensorelements Folgendes umfasst:
Erzeugen eines Sacklochs (428) in dem Sensorgehäuse (220); und
Einführen des Temperatursensorelements (120) in das Sackloch (428).

40. Verfahren nach Anspruch 38 oder 39, bei dem das Anordnen des Temperatursensorelements Folgendes umfasst:
Aufbringen des Temperatursensorelements (120) auf einem Schaltungsträger des Sensors oder an einer anderen Stelle innerhalb oder außerhalb des Sensorgehäuses.

41. Computerprogramm mit einem Programm-Code zum Ausführen eines Verfahrens gemäß einem der Ansprüche 21 bis 33.
